# EUROPÄISCHE PATENTSCHRIFT

(11) **EP 1 875 765 B1**
(45) Veröffentlichungstag und Bekanntmachung des Hinweises auf die Patenterteilung: **09.12.2009**
(21) Anmeldenummer: 06724418.6
(22) Anmeldetag: 19.04.2006
(51) Int. Cl.: H04W 4/22

(54) **VERFAHREN ZUR NOTRUFUNTERDRÜCKUNG BEI MOBILFUNKENDGERÄTEN**
METHOD FOR SUPPRESSING AN EMERGENCY CALL ON MOBILE TELEPHONE TERMINALS
PROCEDE POUR REJETER UN APPEL D'URGENCE SUR DES TERMINAUX DE TELEPHONIE MOBILE

(30) Priorität: 26.04.2005 DE 102005019340
(43) Veröffentlichungstag der Anmeldung: 09.01.2008
(73) Patentinhaber: T-Mobile International AG, 53227 Bonn (DE)
(72) Erfinder: NIES, Ingbert, 53111 Bonn (DE)
(74) Vertreter: Riebling, Peter
(86) Internationale Anmeldenummer: PCT/EP2006/003562
(87) Internationale Veröffentlichungsnummer: WO 2006/114219

(56) Entgegenhaltungen:
- WO-A-01/26409
- WO-A-2004/040931
- "Digital cellular telecommunications system (Phase 2+); Specification of the Subscriber Identity Module - Mobile Equipment (SIM-ME) Interface (3GPP TS 11.11 version 8.12.0 Release 1999); ETSI TS 100 977" ETSI STANDARDS, EUROPEAN TELECOMMUNICATIONS STANDARDS INSTITUTE, SOPHIA-ANTIPO, FR, Bd. 3-T3;SMG9, Nr. V8120, März 2004 (2004-03), XP014015847 ISSN: 0000-0001

## Beschreibung

Die Erfindung betrifft ein Verfahren zur Notrufunterdrückung bei Mobilfunkendgeräten, insbesondere Mobilfunkendgeräten, die sich im Notrufmodus, dem sogenannten "emergency calls only mode" befinden.

Der folgende Text beschreibt das in 3GPP standardisierte Verhalten der Netzsuche von GSM bzw. UMTS Endgeräten (MS / UE), die ein Teilnehmeridentitätsmodul in Form einer SIM oder USIM enthalten:

Verliert ein Endgerät die Versorgung in ihrem Heimatnetz (HPLMN) oder im Roaming Fall im Besucher-Netz (VPLMN), so sucht dieses nach einem anderen Netz (VPLMN*) und versucht sich in diesem anzumelden. Dabei darf sich das Endgerät nicht in einem Netz anmelden, welches auf der Liste der verbotenen Netze (FPLMN) steht. Scheitert die Anmeldung im neuen Netz VPLMN*, so muss das Gerät u.U. , abhängig vom Zurückweisungsgrund (Rejection-Cause), dieses Netz auf die FPLMN-Liste setzen.

Das Endgerät befindet sich nun im "emergency calls only mode", solange es nicht erfolgreich in einem "erlaubten" Netz eingebucht ist, sondern nur Netze findet, die auf der FPLMN Liste stehen, oder in denen der Einbuchversuch zurückgewiesen wird. In diesem "emergency calls only mode" darf das Endgerät Notrufe durchführen, wenn der Teilnehmer eine entsprechende Notrufnummer wählt. Es muss dazu, z.B. in der Anzeige, einen entsprechenden Hinweis anzeigen, aus dem hervorgeht, dass nur Notrufe möglich sind.

Das Endgerät muss im "emergency calls only mode" auch dann Notrufversuche durchführen, wenn der Netzbetreiber, auf dem das Endgerät "campt", Notrufversuche von Teilnehmern dieses HPLMNs verbietet. Der Teilnehmer kann dann beliebig viele Notrufversuche durchführen und das Gerät zeigt weiterhin an, dass Notrufe möglich sind. Diese Anzeige kann in Notrufsituationen Missverständnisse verursachen.

Beispielsweise sind die Mobilfunk Lizenzinhaber in Großbritannien (UK), im Gegensatz zu Deutschland nicht verpflichtet Kunden anderer UK Netzbetreiber Notrufe zu erlauben. Verliert ein Kunde das Netz seines Heimatnetzbetreibers, so führt das Gerät u.U. sogenanntes "Emergency Camping" auf einem verbotenen Netzen durch, ohne sich dort anzumelden. Wenn der Teilnehmer eine entsprechende Notrufnummer wählt, versucht das Endgerät, gemäß dem 3GPP Standard, über dieses Netz einen Notruf durchzuführen. Dazu muss das Gerät, z.B. in der Anzeige, einen entsprechenden Hinweis anzelgen, aus dem hervorgeht, dass nur Notrufe möglich sind. Dieser entsprechende Hinweis ist für Mobilfunkteilnehmer dann irreführend, wenn das Endgerät auf Netzen ein "emergency camping" durchführt, in denen ein Notruf zurückgewiesen wird.

Die WO 01/26409 A1 offenbart ein Mobilkommunikationsnetz, bei dem von dessen Basisstationen an die Mobilfunkendgeräte der Mobilfunkteilnehmer Informationen über einen Rundfunkkanal ausgesendet werden, welche Dienste das Mobilfunknetz unterstützt. Insbesondere werden an die Endgeräte Informationen über den Typ der Zugangstechnologie, die Generation des Mobilfunknetzes und die unterstützen Funkfrequenzen übermittelt. Spezielle Vorgehensweisen bei einer Notrufsituation sind nicht beschrieben.

In WO 2004/040931 A2 ist ein Verfahren zur Auswahl eines Mobilkommunikationsnetzes offenbart, bei dem vom Moblifunkendgerät geprüft wird, welches der verfügbaren Mobilkommunikationsnetze zusätzlich zu einem Sprachdienst (Telefonie) auch einen Datenkommunikationsdienst unterstützt. Vorzugsweise wird vom Mobilfunkendgerät ein Netz ausgewählt, das einen solchen Datenkommunikationsdienst unterstützt. Spezielle Vorgehensweisen bei einer Notrufsituation sind nicht beschrieben.

Die Spezifikation ETSI TS 100 977, V8.12.0, (2004-03): Digital cellular telecommunications system (Phase 2+); Specification of the Subscriber Identity Module - Mobile Equipment (SIM-ME) Interface, befasst sich allgemein mit dem Aufbau und der Funktionsweise eines Teilnehmeridentifikationsmoduls (SIM) for den Mobilfunk.

Die Aufgabe der Erfindung besteht darin, es dem Teilnehmer bzw. dessen Endgerät zu ermöglichen, schon während des "Emergency Camping", ohne Netzzugriff zu erkennen, ob das verbotene Netz, auf dem es "Emergency Camping" durchführt, Notrufe erlaubt oder nicht. Sind Notrufe nicht erlaubt, so darf das Gerät den entsprechenden Hinweis nicht anzeigen, sondern muss versuchen ein Netz zu finden, in dem Notrufe durchgeführt werden dürfen.

Diese Aufgabe wird erfindungsgemäß durch die Merkmale der unabhängigen Patentanspruche gelöst.

Bevorzugte Ausgestaltungen und Weiterbildungen der Erfindung sind in den Unteransprüchen beschrieben.

Erfindungsgemäß bekommt das Endgerät eine Information mitgeteilt, welche Netze für einen Notruf genutzt werden können oder nicht genutzt werden können, und es informiert anhand dieser Information den Benutzer entsprechend und lässt einen Notrufversuch des Benutzers zu oder nicht.

Die technische Lösung kann flexibel von den Netzbetreibern / Service Providern über ein mit dem Endgerät betriebenes Teilnehmeridentitätsmodul, SIM oder USIM, konfiguriert werden. Endgeräte, die eine oder mehrere erfindungsgemäß beschriebenen Lösungen implementiert haben, lassen sich von Kunden verschiedener Netzbetreiber nutzen.

Gemäß einer ersten Ausgestaltung der Erfindung wird eine Datei in Form einer Positiv Liste auf dem Teilnehmeridentitätsmodul, der sogenannten SIM / USIM, des Endgeräts gespeichert.

Die SIM bzw. USIM enthält ein neues Elementary File (EF) mit erlaubten Notrufnetzen (EmPLMN). Der Netzbetreiber/Service Provider hat Schreibrechte, das Endgerät hat Leserechte (Lesen: PIN. Update: ADN, Deaktivieren: ADM, Aktivieren: ADN) auf diese Datei.
Das EF-EmPLMN enthält eine oder mehrere Einträge mit Mobile Country Code (MCC) und Mobile Network Code (MNC), anhand denen die gefundenen Netze identifiziert und abgeglichen werden.

Ist während des "Emergency Campings" das aktuell gefundene aber verbotene Netz in der Liste der erlaubten Notrufnetze enthalten, muss das Endgerät anzeigen, dass nur Notrufe möglich sind und darf einen Notrufversuch "Emergency Setup" durchführen.

Ist das aktuell gefundene aber verbotene Netz in der Liste der erlaubten Notrufnetze nicht enthalten, darf das Endgerät nicht anzeigen, dass nur Notrufe möglich sind. Es darf keinen Notrufversuch "Emergency Setup" durchführen, sondern muss versuchen, ein anderes VPLMN zu finden, in welchem zumindest Notrufe erlaubt sind.

Ist das Gerät erfolgreich in einem Netz eingebucht erfolgt keine Prüfung, ob Notrufe in diesem Netz durchgeführt werden dürfen.

Gemäß einer zweiten Ausgestaltung der Erfindung wird eine Datei in Form einer Negativ Liste auf der SIM / USIM gespeichert (ADM Zugriff).
Die SIM bzw. USIM enthält ein neues Elementary File (EF) mit verbotenen Notrufnetzen (FEmPLMN). Nur der Netzbetreiber bzw. Service Provider hat Schreibrechte, das Endgerät hat lediglich Leserechte (Lesen: PIN, Update: ADM, Deaktiviern: ADM, Aktivieren: ADM) auf diese Datei. Das EF-FEmPLMN enthält eine oder mehrere Einträge mit Mobile Country Code (MCC) und Mobile Network Code (MNC).

Gemäß eine dritten Ausgestaltung der Erfindung wird eine Datei in Form einer Negativ Liste auf der SIM / USIM oder im Gerät gespeichert, (PIN Zugriff).
Die SIM bzw. USIM oder das Endgerät enthält ein neues Elementary File (EF) mit verbotenen Notrufnetzen (FEmPLMN). Das Endgerät hat sowohl Leserechte als auch Schreibrechte (Lesen: PIN, Update: PIN) auf diese Datei. Der Netzbetreiber oder Provider hat das Recht zur Aktivierung / Deaktivierung. Das EF-FEmPLMN enthält mehrere Einträge mit Mobile Country Code (MCC) und Mobile Network Code (MNC).

Wählt der Teilnehmer eine Notrufnummer und darf das Endgerät einen Notrufversuch durchführen (siehe oben), wird aber vom Netz mit entsprechendem Zurückweisungsgrund (Rejection-Cause) zurückgewiesen, so wird dieses Netz, gekennzeichnet durch seine MCC und MNC, auf die Liste der verbotenen Notrufnetze gesetzt. Der Eintrag erfolgt nach dem Prinzip First-in First-out, da die Anzahl der Einträge begrenzt ist.

Das Endgeräteverhalten bei der zweiten und dritten Ausgestaltung der Erfindung ist wie folgt:

Ist das aktuelle verbotene Netz in der Liste der verbotenen Notrufnetze enthalten darf das Endgerät nicht anzeigen, dass nur Notrufe möglich sind. Es darf keinen Notrufversuch "Emergency Setup" durchführen und muss versuchen ein anderes VPLMN zu finden.

Ist das aktuelle verbotene Netz in der Liste der verbotenen Notrufnetze nicht enthalten, muss das Endgerät anzeigen, dass nur Notrufe möglich sind. Dann darf das Endgerät einen Notrufversuch "Emergency Setup" durchführen.

Ist das Gerät erfolgreich in einem Netz eingebucht erfolgt keine Prüfung, ob Notrufe in diesem Netz durchgeführt werden dürfen.

Nachfolgend werden die bevorzugten Ausführungsbeispiele der Erfindung anhand der Zeichnungen näher beschrieben.
- Figur 1: zeigt den Ablauf einer ersten Verfahrensweise der Erfindung.
- Figur 2: zeigt die Zuordnung der Positiv-Liste bzw. der Negativ-Liste entweder zum Endgerät oder zur SIM-Karte.
- Figur 3: zeigt den Ablauf einer zweiten Verfahrensweise der Erfindung.
- Figur 4: zeigt schematisch den Aufbau des Elementary Files, das die Positiv-Liste bzw. die Negativ-Liste enthält.

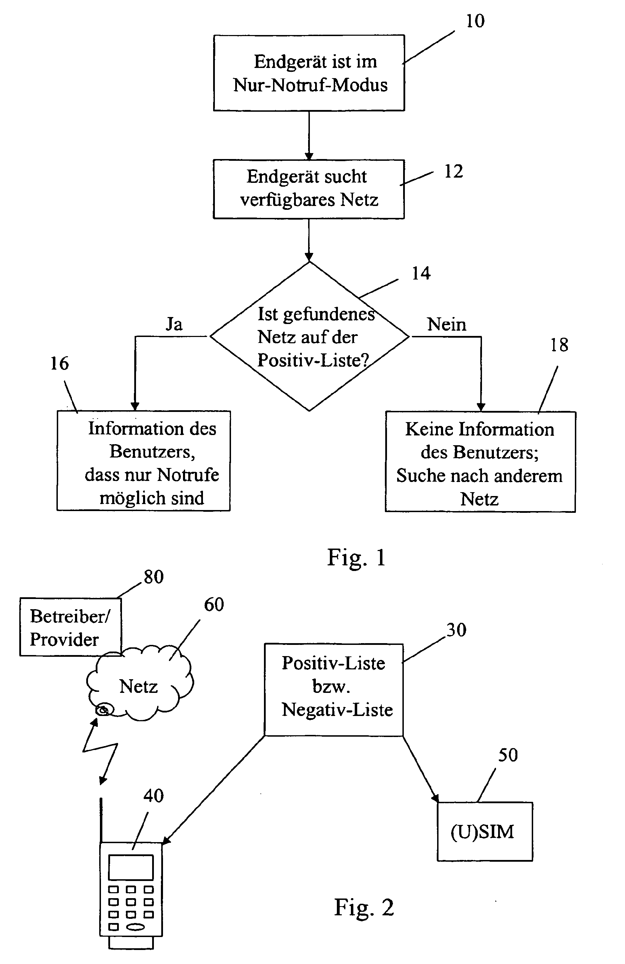

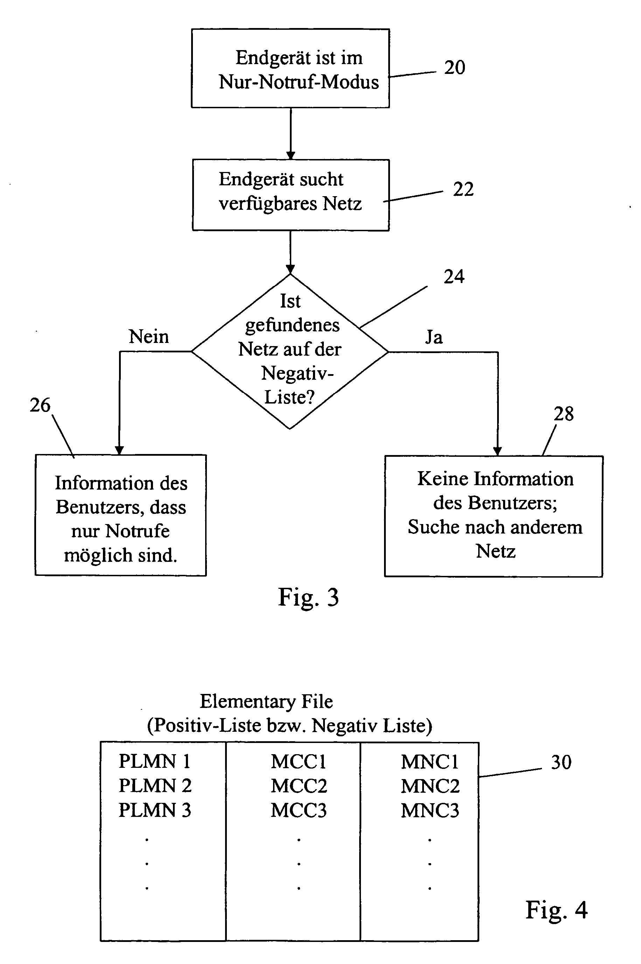

### 1) Positiv Liste auf der SIM / USIM (Figuren 1, 2 und 4)

Die SIM bzw. USIM enthält bei dieser Lösung eine neues Elementary File (EF) 30 mit erlaubten Notrufnetzen (EmPLMN). Die Zugriffsrechte für dieses EF-EmPLMN sind derart gesetzt, dass nur der Netzbetreiber / Service Provider 80 der (Heimat-)Netzes des Benutzers Schreibrechte hat. Das Endgerät 40 hat Leserechte. Tabelle 1 zeigt die Rechteverteilung:

**Tabelle 1**

| **Zugriffsart** | **Berechtigung** |
|---|---|
| Lesen | Endgerät (PIN) |
| Update | Netzbetreiber / Provider (ADM) |
| Deaktivieren | Netzbetreiber / Provider (ADM) |
| Aktivieren | Netzbetreiber / Provider (ADM) |

Das EF-EmPLMN enthält einen oder mehrere Einträge mit Mobile Country Code (MCC) und Mobile Network Code (MNC). Tabelle 2 zeigt beispielhaft den Aufbau der EF-EmPLMN Datei:

**Tabelle 2**

| **Bytes** | **Beschreibung** | **Mandatory/Optional** | **Länge** |
|---|---|---|---|
| 1 bis 3 | PLMN 1 | M | 3 bytes |
| 4 bis 6 | PLMN 2 | O | 3 bytes |
| ... | ... | ... | ... |
| (3n-2) bis 3n | PLMN n | O | 3 bytes |

Details über den generellen Aufbau des Dateisystems einer SIM kann der technischen Spezifikation TS 100 977 V6.1.0 (1998-07) "Digital cellular telecommunications system (Phase 2+); Specification of the Subscriber Identity Module - Mobile Equipment (SIM - ME) interface", GSM 11.11 version 6.1.0, Release 1997 entnommen werden, deren Offenbarung vollinhaltlich in diese Beschreibung aufgenommen wird.

Weitere Details über den generellen Aufbau des Dateisystems einer USIM können ferner der technischen Spezifikation ETSI TS 102 221 "Smart Cards; UICC-Terminal interface; Physical and logical characteristics (Release 1999); "Characteristics of the USIM Application", GSM 31.102 version 5.9.0, Release 5 entnommen werden, deren Offenbarung vollinhaltlich in diese Beschreibung aufgenommen wird.

Der Netzbetreiber / Service Provider 80 kann dieses Datenfile im Rahmen der Kartenpersonalisierung mit den erlaubten Notrufnetzen vorbelegen. Diese Einträge lassen sich auch später per OTA (Over The Air: über die Luftschnittstelle) aktualisieren.

Das Endgerät 40 muss während eines "Emergency Campings", d.h. in einem Nur-Notruf-Modus (Schritt 10), für jedes gefundene Netz 60 prüfen, ob das aktuell gefundene verbotene Netz auch in der Liste der erlaubten Notrufnetze enthalten ist (Schritt 12, 14). Ist dies der Fall, muss das Endgerät anzeigen, dass nur Notrufe möglich sind, sofern die aktuelle Funkzelle Notrufe erlaubt (Schritt 16). Wählt der Teilnehmer eine Notrufnummer muss das Endgerät einen Notrufversuch "Emergency Setup" durchführen, sofern die aktuelle Funkzelle Notrufe erlaubt.

Ist das aktuell gefundene verbotene Netz in der Liste der erlaubten Notrufnetze nicht enthalten, darf das Endgerät nicht anzeigen, dass nur Notrufe möglich sind. Wählt der Teilnehmer eine Notrufnummer, darf das Endgerät keinen Notrufversuch "Emergency Setup" durchführen. Statt dessen muss das Endgerät versuchen ein anderes VPLMN zu finden (Schritt 18).

Ist das Endgerät 40 erfolgreich in einem Netz eingebucht, erfolgt keine Prüfung ob Notrufe in diesem Netz durchgeführt werden dürfen. Die Prüfung ob die aktuelle Funkzelle Notrufe erlaubt ist hiervon ausgeschlossen.

### 2a) Negativ Liste auf der SIM / USIM (ADM Zugriff) (Figuren 2, 3 und 4)

Die SIM bzw. USIM 50 enthält bei dieser Lösung ein neues Datenfeld, ein sogenanntes Elementary File (EF) 30, mit verbotenen Notrufnetzen (FEmPLMN). Die Zugriffsrechte für dieses EF-EmPLMN sind derart gesetzt, dass nur der Netzbetreiber / Service Provider 80 des (Heimat-)Netzes des Benutzers Schreibrechte hat. Das Endgerät 40 hat Leserechte. Tabelle 3 zeigt die Rechteverteilung:

**Tabelle 3**

| **Zugriffsart** | **Berechtigung** |
|---|---|
| Lesen | Endgerät (PIN) |
| Update | Netzbetreiber / Provider (ADM) |
| Deaktivieren | Netzbetreiber / Provider (ADM) |
| Aktivieren | Netzbetreiber / Provider (ADM) |

Das EF-FEmPLMN enthält einen oder mehrere Einträge mit Mobile Country Code (MCC) und Mobile Network Code (MNC), wie man Tabelle 4 entnehmen kann.

**Tabelle 4**

| **Bytes** | **Beschreibung** | **Mandatory/Optional** | **Länge** |
|---|---|---|---|
| 1 bis 3 | PLMN 1 | M | 3 bytes |
| 4 bis 6 | PLMN 2 | O | 3 bytes |
| ... | ... | ... | ... |
| (3n-2) bis 3n | PLMN n | O | 3 bytes |

Der Netzbetreiber / Service Provider 80 kann dieses Datenfeld im Rahmen der Kartenpersonalisierung mit den verbotenen Notrufnetzen vorbelegen. Diese Einträge lassen sich auch später per OTA aktualisieren.

### 2b) Negativ Liste auf der SIM/USIM oder im Gerät (PIN Zugriff)

Die SIM bzw. USIM 50 oder das Endgerät enthält bei dieser Lösung ein neues Elementary File (EF) 30 mit verbotenen Notrufnetzen (FEmPLMN). Die Zugriffsrechte für dieses EF-FEmPLMN sind derart gesetzt, dass das Endgerät 40 sowohl Leserechte als auch Schreibrechte hat. Dies ist in Tabelle 5 dargestellt.

**Tabelle 5**

| **Zugriffsart** | **Berechtigung** |
|---|---|
| Lesen | Endgerät (PIN) |
| Update | Endgerät (PIN) |
| Deaktivieren | Netzbetreiber / Provider (ADM) |
| Aktivieren | Netzbetreiber / Provider (ADM) |

Das EF-FEmPLMN enthält einen oder mehrere Einträge mit Mobile Country Code (MCC) und Mobile Network Code (MNC), wie aus Tabelle 6 ersichtlich:

**Tabelle 6**

| **Bytes** | **Beschreibung** | **Mandatory/Optional** | **Länge** |
|---|---|---|---|
| 1 bis 3 | PLMN 1 | M | 3 bytes |
| 4 bis 6 | PLMN 2 | M | 3 bytes |
| ... | ... | ... | ... |
| (3k-2) bis 3k | PLMN k | M | 3 bytes |
| ... | ... | ... | ... |
| (3n-2) bis 3n | PLMN n | O | 3 bytes |

Der Netzbetreiber /Service Provider 80 kann dieses Datenfeld im Rahmen der Kartenpersonalisierung mit verbotenen Notrufnetzen vorbelegen.

Wählt der Teilnehmer eine Notrufnummer und das Endgerät darf einen Notrufversuch "Emergency Setup" durchführen (siehe unten), wird aber vom Netz mit entsprechendem Rejection-Cause zurückgewiesen, so wird dieses Netz (MCC/MNC) auf die Liste der verbotenen Notrufnetze gesetzt.

Der Eintrag erfolgt nach dem Prinzip First-in First-out, da die Anzahl der Einträge begrenzt ist.

### Endgeräteverhalten im Falle 2a) und 2b)

Endgeräte müssen während des "Emergency Campings", also im Nur-Notruf-Modus (Schritt 20), für ein gefundenes Netz prüfen, ob das aktuell gefundene verbotene Netz gleichzeitig in der Liste der verbotenen Notrufnetze enthalten ist (Schritt 22, 24). Ist dies der Fall, darf das Endgerät nicht anzeigen, dass nur Notrufe möglich sind. Wählt der Teilnehmer eine Notrufnummer darf das Endgerät keinen Notrufversuch "Emergency Setup" durchführen. Statt dessen muss das Endgerät versuchen ein anderes VPLMN zu finden (Schritt 28).

Ist das aktuell gefundene verbotene Netz in der Liste der verbotenen Notrufnetze nicht enthalten, muss das Endgerät anzeigen, dass nur Notrufe möglich sind, sofern die aktuelle Funkzelle Notrufe erlaubt. Wählt der Teilnehmer eine Notrufnummer muss das Endgerät einen Notrufversuch "Emergency Setup" durchführen, sofern die aktuelle Funkzelle Notrufe erlaubt (Schritt 26).

Ist das Gerät erfolgreich in einem Netz eingebucht, erfolgt keine Prüfung, ob Notrufe in diesem Netz durchgeführt werden dürfen. Die Prüfung ob die aktuelle Funkzelle Notrufe erlaubt ist hiervon ausgenommen.

## Patentansprüche

1. Verfahren zur Notrufunterdrückung bei Mobilfunkendgeräten (40), insbesondere im Notrufmodus, bei dem das Endgerät (40) eine Information mitgeteilt bekommt, welche Netze (60) für einen Notruf genutzt werden können oder nicht genutzt werden können,
**dadurch gekennzeichnet,**
**dass** das Endgerät (40) anhand dieser Information den Benutzer entsprechend informiert und einen Notrufversuch des Benutzers zulässt oder nicht, wobei auf einem mit dem Endgerät (40) genutzten Teilnehmeridentitätsmodul, SIM / USIM, (50) eine Datei (30) gespeichert wird, die eine Positiv-Liste der für Notrufe nutzbaren Netze enthält, wobei wenn ein im Notrufmodus aktuell gefundenes aber verbotenes Netz In der Positiv-Liste enthalten ist, das Endgerät anzeigt, dass nur Notrufe möglich sind, und Notrufversuche zulässt (Schritte 10, 12, 14, 16).

2. Verfahren nach Anspruch 1, **dadurch gekennzeichnet, dass** wenn ein im Notrufmodus aktuell gefundenes aber verbotenes Netz in der Positiv-Liste nicht enthalten ist, das Endgerät nicht anzeigt, dass nur Notrufe möglich sind, und Notrufversuche nicht zulässt, sondern versucht, ein anderes Netz zu finden, in welchem zumindest Notrufe erlaubt sind (Schritte 10, 12, 14, 18).

3. Verfahren zur Notrufunterdrückung bei Mobilfunkendgeräten (40), insbesondere im Notrufmodus, bei dem das Endgerät (40) eine Information mitgeteilt bekommt, welche Netze (60) für einen Notruf genutzt werden können oder nicht genutzt werden können,
**dadurch gekennzeichnet,**
**dass** das Endgerät (40) anhand dieser Information den Benutzer entsprechend informiert und einen Notrufversuch des Benutzers zulässt oder nicht, wobei auf einem mit dem Endgerät (40) genutzten Teilnehmeridentltätsmodul, SIM / USIM, (50) oder dem Endgerät (40) selbst eine Datei (30) gespeichert wird, die eine Negativ-Liste der für Notrufe nicht nutzbaren Netze enthält, wobei wenn ein im Notrufmodus aktuell gefundenes aber verbotenes Netz in der Negativ-Liste nicht enthalten ist, das Endgerät anzeigt, dass nur Notrufe möglich sind, und Notrufversuche zulässt (Schritte 20, 22, 24, 26).

4. Verfahren nach Anspruch 3, **dadurch gekennzeichnet, dass** wenn ein im Notrufmodus aktuell gefundenes aber verbotenes Netz in der Negativ-Liste enthalten ist, das Endgerät nicht anzeigt, dass nur Notrufe möglich sind, und Notrufversuche nicht zulässt, sondern versucht, ein anderes Netz zu finden, in welchem zumindest Notrufe erlaubt sind (Schritte 20, 22, 24, 28).

5. Verfahren nach Anspruch 3 oder 4, **dadurch gekennzeichnet, dass** der Netzbetreiber oder Service Provider (80) Schreibrechte, und das Endgerät (40) Leserechte für die Datei (30) erhält.

6. Verfahren nach einem der Ansprüche 3 oder 4, **dadurch gekennzeichnet, dass** die Datei (30) vom Netzbetreiber oder Provider (80) erstellt und aktualisiert wird.

7. Verfahren nach Anspruch 3 oder 4, **dadurch gekennzeichnet, dass** das Endgerät (40) sowohl Schreibrechte als auch Leserechte für die Datei (30) erhält.

8. Verfahren nach einem der Ansprüche 3 oder 4, **dadurch gekennzeichnet, dass** die Datei (30) vom Endgerät (40) erstellt und aktualisiert wird.

9. Verfahren nach einem der Ansprüche 3 oder 4, **dadurch gekennzeichnet, dass** bei einem erfolglosen Notrufversuch das entsprechend verwendete Netz auf der Negativ-Liste der Datei (30) gespeichert wird.

10. Verfahren nach einem der Ansprüche 1 bis 9, **dadurch gekennzeichnet, dass** die Datei (30) als eine neue Datei im Dateisystem des Teilnehmeridentitätsmoduls (50) oder im Dateisystem des Endgeräts (40), als sogenanntes Elementary File, gespeichert wird.

11. Verfahren nach einem der Ansprüche 1 bis 10, **dadurch gekennzeichnet, dass** die Datei (30) eine oder mehrere Einträge mit Mobile Country Code (MCC) und Mobile Network Code (MNC) der darin gespeicherten enthält, mit welchen die gefundenen Netze abgeglichen werden.

12. Teilnehmeridentitätsmodul für die Verwendung in Mobilfunkendgeräten zur Durchführung des Verfahrens gemäß den Ansprüchen 1 bis 11, **dadurch gekennzeichnet, dass** es eine Datel (30) in Form eines neuen Elementary Files enthält, die eine Liste der für Notrufe nutzbaren oder nicht nutzbaren Netze enthält.

13. Mobilfunkendgerät zur Durchführung des Verfahrens gemäß den Ansprüchen 1 bis 11, **dadurch gekennzeichnet, dass** es eine Datei (30) in Form eines neuen Elementary Files enthält, die eine Liste der für Notrufe nutzbaren oder nicht nutzbaren Netze enthält.

## Claims

1. Method for emergency call suppression for mobile telephone terminals (40), in particular in emergency call mode, in which the terminal (40) has information communicated which networks (60) may be used for an emergency call or may not be used, **characterised in that** the terminal (40) using this information informs the user accordingly and permits an emergency call attempt by the user or does not, wherein a data file (30), which contains a positive list of the networks which can be used for emergency calls, is stored on a subscriber identity module, SIM/USIM, (50) used with the terminal (40), wherein when a network actually found in the emergency call mode but which is prohibited is present in the positive list, the terminal displays that only emergency calls are possible, and permits emergency call attempts (steps 10, 12, 14, 16).

2. Method according to claim 1, **characterised in that** when a network currently found in the emergency call mode but which is prohibited is not present in the positive list, the terminal does not display that only emergency calls are possible, and does not permit emergency call attempts, but tries to find a further network in which at least emergency calls are allowed (steps 10, 12, 14, 18).

3. Method for emergency call suppression in mobile telephone terminals (40), in particular in emergency call mode, in which the terminal (40) has information communicated which networks (60) may be used for an emergency call or may not be used, **characterised in that** the terminal (40) using this information informs the user accordingly and permits an emergency call attempt by the user or does not, wherein a data file (30), which contains a negative list of the networks which cannot be used for emergency calls, is stored on a subscriber identity module, SIM/USIM, (50) used with the terminal (40) or the terminal (40) itself, wherein when a network currently found in the emergency call mode but which is prohibited is not present in the negative list, the terminal displays that only emergency calls are possible, and permits emergency call attempts (steps 20, 22, 24, 26).

4. Method according to claim 3, **characterised in that** when a network current found in the emergency call mode but which is prohibited is present in the negative list, the terminal does not display that only emergency calls are possible, and does not permit emergency call attempts, but tries to find a further network in which at least emergency calls are allowed (steps 20, 22, 24, 28).

5. Method according to claim 3 or 4, **characterised in that** the network operator or service provider (80) is given writing rights, and the terminal (40) is given reading rights for the data file (30).

6. Method according to one of claims 3 or 4, **characterised in that** the data file (30) is generated and updated by the network operator or provider (80).

7. Method according to claim 3 or 4, **characterised in that** the terminal (40) is given both writing rights and reading rights for the data file (30).

8. Method according to one of claims 3 or 4, **characterised in that** the data file (30) is generated and updated by the terminal (40).

9. Method according to one of claims 3 or 4, **characterised in that** in the event of an unsuccessful emergency call attempt, the network used accordingly is stored on the negative list of the data file (30).

10. Method according to one of claims 1 to 9, **characterised in that** the data file (30) is stored as a new data file in the data file system of the subscriber identity module (50) or in the data file system of the terminal (40), as a so-called Elementary File.

11. Method according to one of claims 1 to 10, **characterised in that** the data file (30) contains one or more inputs with Mobile Country Code (MCC) and Mobile Network Code (MNC) of those stored therein, with which the networks found are adjusted.

12. Subscriber identity module for use in mobile telephone terminals for carrying out the method according to claims 1 to 11, **characterised in that** it contains a data file (30) in the form of a new Elementary File which contains a list of the networks which can be used for emergency calls or which cannot be used.

13. Mobile telephone terminal for carrying out the method according to claims 1 to 11, **characterised in that** it contains a data file (30) in the form of a new Elementary File which contains a list of the networks which can be used for emergency calls or which cannot be used.

## Revendications

1. Procédé pour l'inhibition d'appels d'urgence dans des appareils terminaux de radiotéléphonie mobile (40), en particulier dans le mode d'appel d'urgence, dans lequel l'appareil terminal (40) reçoit une information concernant les réseaux (60) qui peuvent être utilisés pour un appel d'urgence et ceux qui ne le peuvent pas,
**caractérisé en ce que**
à l'aide de cette information, l'appareil terminal (40) informe l'utilisateur de manière correspondante et admet ou non une tentative d'appel d'urgence de l'utilisateur, et un fichier (30) est enregistré sur un module d'identité d'utilisateur, de type SIM/USIM (50) utilisé avec l'appareil terminal (40), ce fichier contenant une liste positive des réseaux utilisables pour des appels d'urgence, et quand un réseau actuellement trouvé en mode d'appel d'urgence mais interdit est contenu dans la liste positive, l'appareil terminal indique que seuls des appels d'urgence sont possibles et autorise des tentatives d'appel d'urgence (étapes 10, 12, 14, 16).

2. Procédé selon la revendication 1, **caractérisé en ce que**, lorsqu'un réseau actuellement trouvé en mode d'appel d'urgence mais interdit n'est pas contenu dans la liste positive, l'appareil terminal n'indique pas que seuls des appels d'urgence sont possibles et n'autorise pas des tentatives d'appel d'urgence, mais tente de trouver un autre réseau dans lequel au moins des appels d'urgence sont autorisés (étapes 10, 12, 14, 18).

3. Procédé pour l'inhibition d'appels d'urgence dans des appareils terminaux de radiotéléphonie mobile (40), en particulier dans le mode d'appel d'urgence, dans lequel l'appareil terminal (40) reçoit une information concernant les réseaux (60) qui peuvent être utilisés pour un appel d'urgence et ceux qui ne le peuvent pas,
**caractérisé en ce que**
à l'aide de cette information, l'appareil terminal (40) informe l'utilisateur de manière correspondante et admet ou non une tentative d'appel d'urgence de l'utilisateur, et un fichier (30) est enregistré soit sur un module d'identité d'utilisateur, de type SIM/USIM (50) utilisé avec l'appareil terminal (40) soit sur l'appareil terminal (40) lui-même, ce fichier contenant une liste négative des réseaux qui ne sont pas utilisables pour des appels d'urgence, et quand un réseau actuellement trouvé dans le mode d'appel d'urgence mais interdit n'est pas contenu dans la liste négative, l'appareil terminal indique que seuls des appels urgents sont possibles et admet des tentatives d'appel d'urgence (étapes 20, 22, 24, 28).

4. Procédé selon la revendication 3, **caractérisé en ce que** lorsqu'un réseau actuellement trouvé dans le mode d'appel d'urgence mais interdit est contenu dans la liste négative, l'appareil terminal n'indique pas que seuls des appels d'urgence sont possibles et n'admet pas des tentatives d'appel d'urgence, mais tente de trouver un autre réseau dans lequel au moins des appels d'urgence sont autorisés (étapes 20, 22, 24, 28).

5. Procédé selon la revendication 3 ou 4, **caractérisé en ce que** l'exploitant du réseau ou fournisseur de services (80) reçoit des droits d'écriture pour le fichier (30), et l'appareil terminal (40) reçoit des droits de lecture pour le fichier (30).

6. Procédé selon l'une des revendications 3 ou 4, **caractérisé en ce que** le fichier (30) est créé et actualisé par l'exploitant du réseau ou fournisseur de services (80).

7. Procédé selon la revendication 3 ou 4, **caractérisé en ce que** l'appareil terminal (40) reçoit aussi bien des droits d'écriture que des droits de lecture pour le fichier (30).

8. Procédé selon l'une des revendications 3 ou 4, **caractérisé en ce que** le fichier (30) est créé et actualisé par l'appareil terminal (40).

9. Procédé selon l'une des revendications 3 ou 4, **caractérisé en ce que** lorsqu'une tentative d'appel d'urgence est restée sans succès, le réseau utilisé correspondant est enregistré sur la liste négative du fichier (30).

10. Procédé selon l'une des revendications 1 à 9, **caractérisé en ce que** le fichier (30) est enregistré, soit sous forme d'un nouveau fichier dans le système de fichiers du module d'identité d'utilisateur (50), soit dans le système de fichiers de l'appareil terminal (40), sous forme d'un fichier dit "Elementary File".

11. Procédé selon l'une des revendications 1 à 10, **caractérisé en ce que** le fichier (30) contient une ou plusieurs entrées avec le code dit "Mobile Country Code" (MCC) et le code dit "Mobile Network Code" (MNC) des réseaux mémorisés dans ce fichier, avec lesquelles les réseaux trouvés peuvent être comparés.

12. Module d'identité d'utilisateur destiné à être utilisé dans des appareils terminaux de radiotéléphonie mobile, pour mettre en oeuvre le procédé selon les revendications 1 à 11, **caractérisé en ce qu'**il contient un fichier (30) sous la forme d'un nouveau fichier dit "Elementary File", qui contient une liste des réseaux utilisables ou non utilisables pour des appels d'urgence.

13. Appareil terminal de radiotéléphonie mobile pour mettre en oeuvre le procédé selon les revendications 1 à 11, **caractérisé en ce qu'**il contient un fichier (30) sous la forme d'un nouveau fichier dit "Elementary File", qui contient une liste des réseaux utilisables ou non utilisables pour des appels d'urgence.
